# EUROPEAN PATENT APPLICATION

(11) **EP 1 645 429 A1**
(43) Date of publication of application: **12.04.2006**
(21) Application number: 04746653.7
(22) Date of filing: 30.06.2004
(51) Int. Cl.: B41M 5/26, G11B 7/24

(54) **OPTICAL RECORDING DISK**

(30) Priority: 01.07.2003 JP 2003189273
(71) Applicant: TDK Corporation, Chuo-ku, Tokyo 103-8272 (JP)
(72) Inventor: KIKUKAWA, Takashi, c/o TDK Corporation, Tokyo 1038272 (JP); FUKUZAWA, Narutoshi, c/o TDK Corporation, Tokyo 1038272 (JP); KOBAYASHI, Tatsuhiro, c/o TDK Corporation, Tokyo 1038272 (JP)
(74) Representative: HOFFMANN EITLE
(86) International application number: PCT/JP2004/009184
(87) International publication number: WO 2005/002868

(57) **Abstract**

It is an object of the present invention to provide an optical recording disc which can record data constituted by a recording mark train including recording marks and blank regions neighboring recording marks therein and reproduce the data therefrom even in the case where the lengths of a recording mark and a blank region between neighboring recording marks are shorter than the resolution limit, thereby markedly increasing the storage capacity thereof and can improve a C/N ratio of a reproduced signal and the reproduction durability thereof.

An optical recording disc includes a substrate 2, a reflective layer 3, a third dielectric layer 4, a light absorption layer 5, a second dielectric layer 6, a decomposition reaction layer 7 containing platinum oxide as a primary component, a first dielectric layer 8 and a light transmission layer 9 and is constituted so that when the optical recording disc is irradiated with a laser beam 20 from the side of the light transmission layer 9, the platinum oxide contained in the decomposition reaction layer 7 as a primary component is decomposed into platinum and oxygen so that a bubble pit is formed in the decomposition reaction layer 7 by thus generated oxygen gas and fine particles of the noble metal penetrate into the bubble pit, thereby forming a recording mark in the decomposition reaction layer 7.

## Description

### [FIELD OF THE INVENTION]

The present invention relates to an optical recording disc and, particularly, to an optical recording disc which can record data constituted by a recording mark train including recording marks and blank regions neighboring recording marks therein and reproduce the data therefrom even in the case where the lengths of a recording mark and a blank region between neighboring recording marks are shorter than the resolution limit, thereby markedly increasing the storage capacity thereof and can improve the C/N ratio of the reproduced signal and the reproduction durability thereof.

### [BACKGROUND OF THE INVENTION]

Optical recording discs such as the CD, DVD and the like have been widely used as recording media for recording digital data and an optical recording disc that offers improved recording density and has an extremely high data transfer rate has been recently developed.

In such an optical recording disc, the storage capacity of the optical recording disc is improved by reducing a wavelength λ of a laser beam used for recording and reproducing data and increasing a numerical aperture NA of an objective lens, thereby reducing the diameter of the laser beam spot.

### [DISCLOSURE OF THE INVENTION]

### [PROBLEMS TO BE SOLVED BY THE INVENTION]

In an optical recording disc, in the case where the length of a recording mark formed in the optical recording disc and the length between neighboring recording marks, namely, the length of a region (hereinafter referred to as "a blank region") where no recording mark is formed are shorter than the resolution limit, data cannot be reproduced from the optical recording disc.

The resolution limit is determined by the wavelength λ of a laser beam and the numerical aperture NA of an objective lens for converging the laser beam and in the case where the frequency of repetition of a recording mark and a blank region, namely, the spatial frequency, is equal to or larger than 2NA / λ, data recorded in the recording mark and the blank region cannot be read.

Therefore, the length of the recording mark and the blank region corresponding to the spatial frequency which can be read both become equal to or larger than λ / 4NA and in the case where an objective lens having a numerical aperture NA is used to converge a laser beam having a wavelength λ on the surface of an optical recording disc, a recording mark having a length of λ / 4NA and a blank region having a length of λ / 4NA are the shortest recording mark and the shortest blank region which can be read.

Thus when data recorded in an optical recording disc are to be reproduced, there exists a resolution limit within which data can be read and the length of a recording mark and the length of a blank region which can be read are restricted. Therefore, if a recording mark having a length shorter than the resolution limit and a blank region having a length shorter than the resolution limit are formed in an optical recording disc, thereby recording data therein, the thus recorded data cannot be reproduced, so that the length of a recording mark and the length of a blank region which can be formed for recording data in an optical recording disc are inevitably restricted and a recording mark having a length shorter than the resolution limit and a blank region having a length shorter than the resolution limit are not normally formed in an optical recording disc to record data therein.

Therefore, in order to increase the storage capacity of an optical recording disc, it is required to shorten the wavelength λ of the laser beam used for reproducing data or increase the numerical aperture NA of the objective lens, thereby decreasing the resolution limit so that data consisting of a recording mark having a shorter length and a blank region having a shorter length can be reproduced.

However, there is a limit to how far the wavelength λ of the laser beam used for reproducing data can be shortened and how far the numerical aperture NA of the objective lens can be increased, so that the increase in the storage capacity of an optical recording disc that can be achieved by decreasing the resolution limit is limited.

Further, in order to prevent the data reproduction characteristics of an optical recording disc from being degraded in the case of increasing the storage capacity thereof by some means or other, it is necessary for the optical recording disc to have such a property that when data recorded therein are reproduced, a reproduced signal having a high C/N ratio can be obtained and such a high data reproduction durability that data recorded therein can be prevented from being degraded even when data recorded therein are reproduced repeatedly.

It is therefore an object of the present invention to provide an optical recording disc which can record data constituted by a recording mark train including recording marks and blank regions neighboring recording marks therein and reproduce the data therefrom even in the case where the lengths of a recording mark and a blank region between neighboring recording marks are shorter than the resolution limit, thereby markedly increasing the storage capacity thereof and can improve the C/N ratio of the reproduced signal and the reproduction durability thereof.

### [MEANS FOR SOLVING THE PROBLEMS]

[0012] The above object of the present invention can be accomplished by an optical recording disc constituted so that data can be recorded therein and reproduced therefrom by converging a laser beam having a wavelength λ of 390 nm to 420 nm thereonto using an objective lens having a numerical aperture of 0.7 to 0.9, the optical recording disc comprising at least a substrate, a reflective layer formed on the substrate and having a thickness of 10 nm to 300 nm, a second dielectric layer formed on the reflective layer and having a thickness of 5 nm to 100 nm, a decomposition reaction layer formed on the second dielectric layer, having- a thickness of 2 nm to 80 nm and containing noble metal oxide as a primary component, a first dielectric layer formed on the decomposition reaction layer, and a light transmission layer formed on the first dielectric layer and having a thickness of 10 µm to 200 µm and being constituted so that when it is irradiated with the laser beam from the side of the light transmission layer, the noble metal oxide contained in the decomposition reaction layer as a primary component is decomposed into a noble metal and oxygen so that a bubble pit is formed in the decomposition reaction layer by thus generated oxygen gas and fine particles of the noble metal precipitate into the bubble pit, thereby forming a recording mark in the decomposition reaction layer.

In a study done by the inventors of the present invention, it was found that when the optical disc comprising a decomposition reaction layer containing noble metal oxide as a primary component was irradiated with a laser beam having a wavelength λ of 390 nm to 420 nm using an objective lens having a numerical aperture of 0.7 to 0.9 from the side of the light transmission layer, the noble metal oxide contained in the decomposition reaction layer as a primary component was decomposed into a noble metal and oxygen so that a bubble pit was formed in the decomposition reaction layer by thus generated oxygen gas and fine particles of the noble metal precipitated into the bubble pit, thereby forming a recording mark in the decomposition reaction layer and recording data in the optical recording disc and that in the case where data were recorded in the optical recording disc in this manner, even if the lengths of a recording mark and a blank region between neighboring recording marks which constituted a recording mark train were shorter than the resolution limit, data could be reproduced by converging a laser beam having a wavelength λ of 390 nm to 420 nm onto the optical recording disc using an objective lens having a numerical aperture of 0.7 to 0.9 from the side of the light transmission layer.

Although it is not altogether clear why, in the case where the noble metal oxide contained in the decomposition reaction layer as a primary component is decomposed into a noble metal and oxygen, the bubble pit is formed in the decomposition reaction layer and fine particles of noble metal precipitate into the bubble pit, thereby forming a recording mark in the decomposition reaction layer and recording data in the optical recording disc, whereby it is possible to reproduce data recorded in the optical recording disc even in the case where the length of a recording mark or the length of a blank region between neighboring recording marks constituting a recording mark train is shorter than the resolution limit, it is reasonable to conclude that near-field light is generated by irradiating the fine particles of noble metal with the laser beam for reproducing data and the resolution limit disappears or that the resolution limit becomes smaller due to the interaction between the fine particles of noble metal precipitated into the bubble pit and the laser beam with which the fine particles of noble metal are irradiated.

Further, in the present invention, the reflective layer having a thickness of 10 nm to 300 nm is formed on the substrate and in a study done by the inventors of the present invention, it was found that in the case where the reflective layer having a thickness of 10 nm to 300 nm was formed on the substrate, it was possible to improve the data reproduction durability of the optical recording disc whose decomposition reaction layer was formed with a recording mark and the C/N ratio of the reproduced signal.

Specifically, in a study done by the inventors of the present invention, it was found that in the case where no reflective layer was provided in an optical recording disc, data recorded in the optical recording disc became degraded when the data were repeatedly reproduced,.

Although it is not altogether clear why in the case where no reflective layer is provided in an optical recording disc, data recorded in the optical recording disc becomes degraded when the data are repeatedly reproduced, it is reasonable to assume that in an optical recording disc constituted so that data can be recorded therein and reproduced therefrom by converging a laser beam having a wavelength λ of 390 nm to 420 nm thereonto using an objective lens having a numerical aperture of 0.7 to 0.9, when it is irradiated with the laser beam for reproducing recorded data, the optical recording disc is heated and the shape of the bubble pit formed in the decomposition reaction layer and the state of the fine particles of noble metal precipitated into the bubble pit are changed or that not only the state of the decomposition reaction layer but also the states of layers other than the decomposition reaction layer are changed.

According to the present invention, the reflective layer having a thickness of 10 nm to 300 nm is formed on the substrate, so that when the optical recording disc is irradiated with a laser beam for reproducing data, heat generated by the laser beam is diffused by the reflective layer from the region of the decomposition reaction layer irradiated with the laser beam to the regions of the decomposition reaction layer therearound and it is therefore possible to reliably prevent the optical recording disc from being excessively heated. Accordingly, it is possible to prevent data recorded in the optical recording disc from being degraded and improve the data reproduction durability of the optical recording disc.

Moreover, in the case where the reflective layer having a thickness of 10 nm to 300 nm is formed on the substrate, light reflected by the reflective layer and light reflected by layers formed on the reflective layer interfere with each other, whereby the amount of reflected light that participates in the generation of a reproduced signal becomes large to improve the C/N ratio of the reproduced signal.

Thus, according to the present invention, by forming the bubble pit in the decomposition reaction layer and precipitating the fine particles of a noble metal into the bubble pit, thereby forming a recording mark in the decomposition reaction layer, even if the lengths of a recording mark and a blank region between neighboring recording marks which constitute a recording mark train are shorter than the resolution limit, data can still be reproduced. Therefore, it is possible to record data in the optical recording disc, thereby markedly increasing the storage capacity of the optical recording disc. Further, since heat generated by the laser beam is diffused by the reflective layer from the region of the decomposition reaction layer irradiated with the laser beam to the regions of the decomposition reaction layer therearound, it is possible to reliably prevent the optical recording disc from being excessively heated and it is possible to increase the amount of reflected light utilizing interference between light reflected by the reflective layer and light reflected by layers formed on the reflective layer. Therefore, it is possible to improve the data reproduction durability of the optical recording disc and the C/N ratio of the reproduced signal.

In the present invention, the noble metal oxide contained in the decomposition reaction layer as a primary component is not particularly limited but oxide containing at least one noble metal selected from a group consisting of Ag, Pt and Pd is preferably selected from the viewpoint of easy formation of oxide and the efficiency of generating near-field light, and platinum oxide PtOx is particularly preferable since the decomposition temperature thereof is high.

Platinum oxide PtOx has a higher decomposition temperature than those of other noble metal oxides. Therefore, when a laser beam whose power is set to that for recording data is irradiated onto the optical recording disc, thereby forming a recording mark, since it is possible to prevent heat from being diffused from the region of the decomposition reaction layer irradiated with the laser beam to other regions of the decomposition reaction layer therearound and prevent a decomposition reaction of platinum oxide PtOx from occurring at regions other than the region irradiated with the laser beam, it is possible to form a bubble pit in the decomposition reaction layer, thereby forming a recording mark.

Further, since platinum oxide PtOx has a higher decomposition temperature than those of other noble metal oxides, even in the case where a laser beam having a high power for reproducing data is irradiated onto the optical recording disc, thereby reproducing data, there is no risk of platinum oxide PtOx decomposing into platinum and oxygen. Therefore, even in the case of repeatedly reproducing data recorded in the optical recording disc, a bubble pit can be formed without change in the shape of a recording mark and a new bubble pit is not formed at regions other than a region where the recording mark is formed. Accordingly, it is possible to improve the reproduction durability of an optical recording disc.

In the present invention, in order to obtain a reproduced signal having a high C/N ratio even in the case where the length of a recording mark or the length of a blank region between neighboring recording marks is shorter than the resolution limit, it is preferable for x in the general formula of platinum oxide: PtOₓ to be equal to or larger than 0.5 and equal to or smaller than 4.0 and more preferable for x to be equal to or larger than 1.0 and smaller than 3.

In the present invention, in the case where silver oxide AgOy is employed as noble metal oxide, it is preferable for y to be equal to or larger than 0.5 and equal to or smaller than 1.5 and more preferable for *y* to be equal to or larger than 0.5 and equal to or smaller than 1.0.

In the present invention, it is preferable for each fine particle of platinum formed by the decomposition of platinum oxide to have a particle size smaller than the bubble pit to be formed in the decomposition reaction layer. In the case where each fine particle of platinum formed by the decomposition of platinum oxide has a particle size sufficiently smaller than the bubble pit to be formed in the decomposition reaction layer, it is possible to effectively prevent the shape of the bubble pit from being affected by fine particles of platinum precipitating into the bubble pit and prevent a recording mark from being undesirably deformed. Here, the particle diameter of the fine particle of platinum is defined as the diameter of a spherical fine particle of platinum.

In the present invention, the reflective layer serves to dissipate heat generated by the laser beam from the region of the decomposition reaction layer irradiated with the laser beam to the regions of the decomposition reaction layer therearound and simultaneously serves to reflect the laser beam entering through the light transmission layer so as to emit it from the light transmission layer.

The material usable for forming the reflective layer is not particularly limited insofar as it can reflect the laser beam and dissipate heat generated by the laser beam therethrough and the reflective layer preferably contains at least one kind of element selected from a group consisting of Mg, Al, Ti, Cr, Fe, Co, Ni, Cu, Zn, Ge, Ag, Pt and Au.

In the present invention, the reflective layer is formed so as to have a thickness of 10 nm to 300 nm and preferably formed so as to have a thickness of 20 nm to 200 nm.

In the case where the reflective layer is thinner than 10 nm, the reflective layer cannot dissipate heat therethrough in a desired manner. On the other hand, in the case where the reflective layer is thicker than 300 nm, it takes a very long time to form the reflective layer and the productivity of the reflective layer is liable to become poor.

In the present invention, it is preferable for the optical recording disc to further comprise a third dielectric layer formed having a thickness of 10 nm to 140 nm and a light absorption layer formed on the third dielectric layer and having a thickness of 5 nm to 100 nm located between the reflective layer and the second dielectric layer so that when the light absorption layer is irradiated with a laser beam via the light transmission layer, the light absorption layer absorbs the laser beam and generates heat.

In the case where the third dielectric layer and the light absorption layer are formed between the reflective layer and the second dielectric layer and the light absorption layer is constituted so as to absorb a laser beam and generate heat when the light absorbing layer is irradiated with the laser beam via the light transmission layer, even if the decomposition reaction layer does not readily generate heat when the laser beam is irradiated thereonto, it is possible to decompose noble metal oxide contained in the decomposition reaction layer as a primary component into noble metal and oxygen by heat transferred from the light absorption layer. Therefore, even if the decomposition reaction layer is formed thin so as to be easily deformed or even if the decomposition reaction layer contains noble metal oxide having high light transmittance with respect to a laser beam, it is possible to decompose noble metal oxide in a desired manner by irradiating the decomposition reaction layer with the laser beam, thereby forming a recording mark therein.

In the present invention, the light absorption layer preferably contains a material having a high absorption coefficient with respect to a laser beam and low thermal conductivity and more preferably contains at least one of Sb and Te.

In the present invention, as an alloy contained in the light absorption layer and containing at least one of Sb and Te, an alloy represented by the general formula: (SbₐTe₁₋ₐ)_{1-b}M_{b} or {(GeTe)_{c}(Sb₂Te₃)_{1-c}}_{d}M_{1-d} is particularly preferable. Here, the element M represents an element other than Sb and Te.

In the case where the alloy which contains at least one of Sb and Te and is contained in the light absorption layer is represented by the general formula: (SbₐTe₁₋ₐ)_{1-b}M, it is preferable for *a* and *b* to be such that *a* is equal to or larger than 0 and equal to or smaller than 1 and that *b* is equal to or larger than 0 and equal to or smaller than 0.25. In the case where *b* is larger than 0.25, the light absorption coefficient of the light absorption layer becomes lower than the required value and the thermal conductivity thereof becomes lower than the required value.

On the other hand, in the case where the alloy which contains at least one of Sb and Te and is contained in the light absorption layer is represented by the general formula: {(GeTe)_{c}(Sb₂Te₃)_{1-c}}_{d}M_{1-d}, it is preferable for c and d to be such that c is equal to or larger than 1/3 and equal to or smaller than 2/3 and *d* is equal to or larger than 0.9.

The element M is not particularly limited but it is preferable for the element M to be at least one element selected from a group consisting of In, Ag, Au, Bi, Se, Al, P, H, Si, C, V, W, Ta, Zn, Mn, Ti, Sn, Pb, Pd, N, O and rare earth elements (Sc, Y and lanthanoid) as a primary component. In the case of employing a laser beam having a wavelength λ of 390 nm to 420 nm, it is particularly preferable for the element M to be at least one element selected from a group consisting of Ag, In and rare earth elements.

In the present invention, in the case where neither a third dielectric layer nor a light absorbing layer is provided between the substrate and the second dielectric layer, it is preferable to form the decomposition reaction layer so as to have a thickness of 20 nm to 80 nm.

Since the decomposition reaction layer contains a noble metal oxide having a high transmittance with respect to a laser beam as a primary component, in the case where the decomposition reaction layer is thinner than 20 nm, the decomposition reaction layer cannot absorb a laser beam sufficiently and the decomposition reaction layer is not sufficiently heated even when the decomposition reaction layer is irradiated with the laser beam. Therefore, the decomposition reaction layer sometimes cannot be decomposed in a desired manner.

On the other hand, in the case where the third dielectric layer and the light absorbing layer are provided between the substrate and the second dielectric layer, since it is unnecessary for the decomposition reaction layer itself to generate heat when it is irradiated with a laser beam, it is possible to form the decomposition reaction layer to be thinner insofar as it can be formed continuously. Therefore, in this case, it is preferable to form the decomposition reaction layer so as to have a thickness of 2 nm to 50 nm.

In the present invention, it is preferable for the second dielectric layer and the light absorption layer to be deformed when the optical recording disc is irradiated with the laser beam, whereby the decomposition reaction layer is decomposed into noble metal and oxygen and the bubble pit is formed.

Since deformed regions of the second dielectric layer and the light absorption layer have different optical characteristics from regions where they are not deformed, it is possible to further improve the C/N ratio of the reproduced signal.

### [TECHNICAL ADVANTAGES OF THE INVENTION]

According to the present invention, it is possible to provide an optical recording disc which can record data constituted by a recording mark train including recording marks and blank regions neighboring recording marks therein and reproduce the data therefrom even in the case where the lengths of a recording mark and a blank region between neighboring recording marks are shorter than the resolution limit, thereby markedly increasing the storage capacity thereof and can improve the C/N ratio of the reproduced signal and the reproduction durability thereof.

### [BRIEF DESCRIPTION OF THE DRAWINGS]

[FIGURE 1]

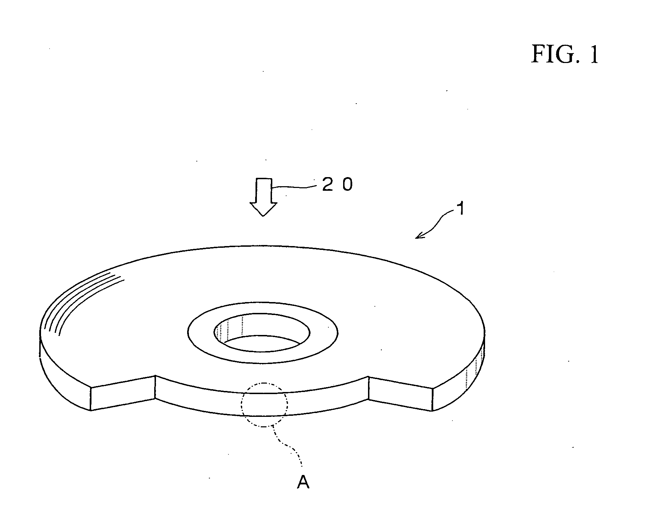

   Figure 1 is a schematic cross sectional view showing an optical recording disc that is a preferred embodiment of the present invention.
[FIGURE 2]

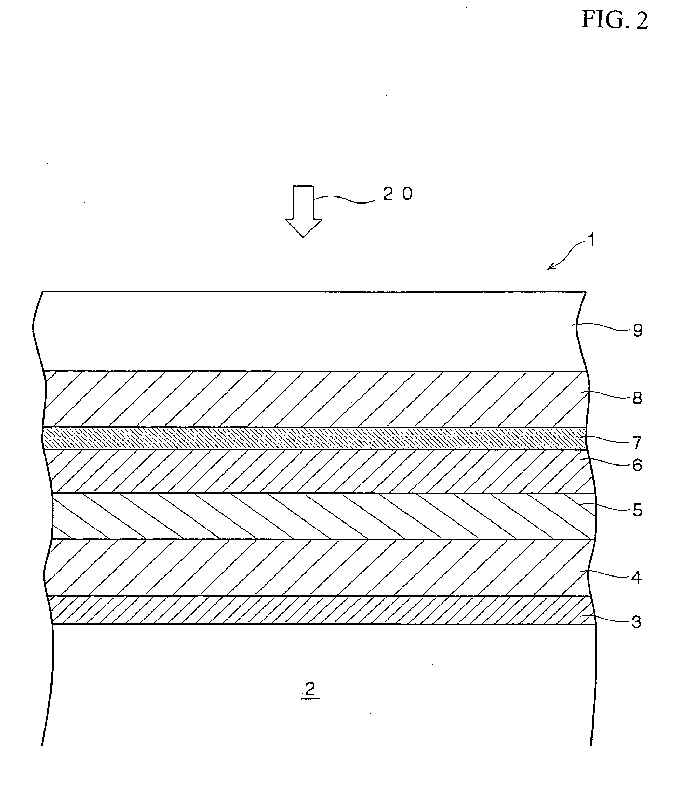

   Figure 2 is an enlarged schematic cross-sectional view of the part of the optical recording disc in Figure 1 indicated by A.
[FIGURE 3]

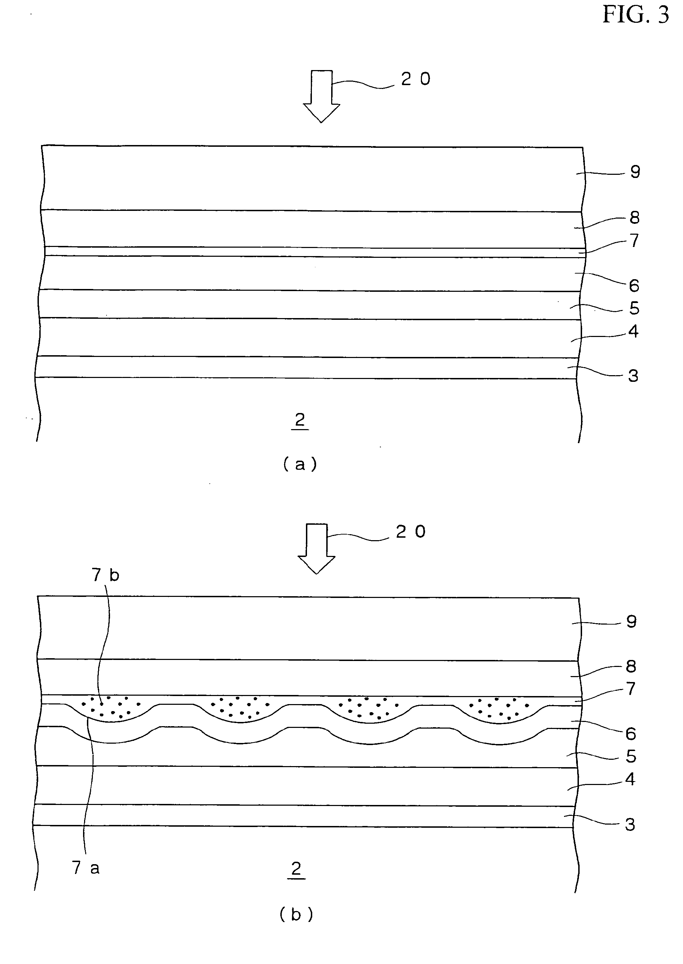

   Figure 3 (a) is a partly enlarged schematic cross-sectional view of an optical recording disc before data are recorded therein and Figure 3 (b) is a partly enlarged schematic cross-sectional view of an optical recording disc after data were recorded therein.
[FIGURE 4]

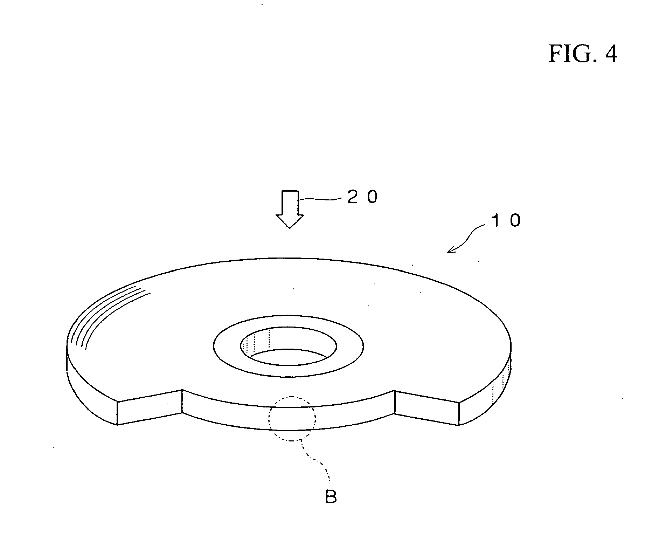

   Figure 4 is a schematic perspective view showing an optical recording disc that is another preferred embodiment of the present invention.
[FIGURE 5]

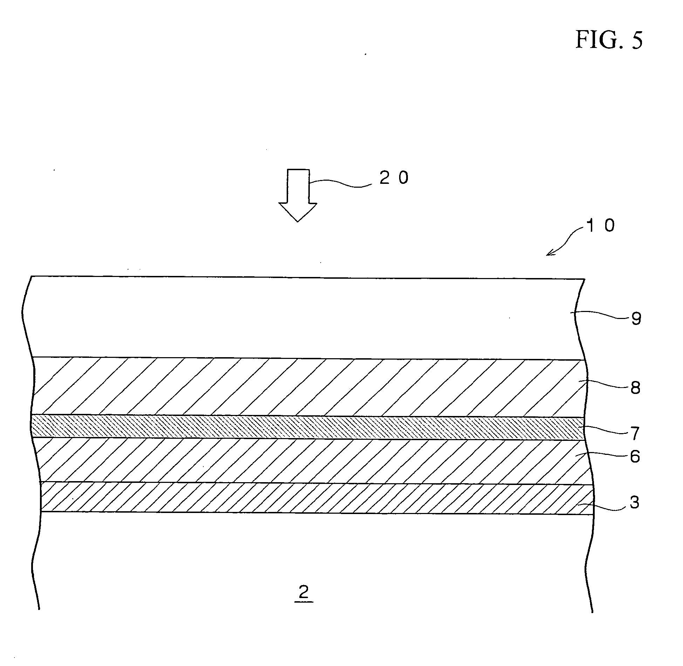

   Figure 5 is an enlarged schematic cross-sectional view of the part of the optical recording disc in Figure 4 indicated by B.

### [EXPLANATION OF REFERENCE NUMERALS]

- 1: optical recording disc
- 2: substrate
- 3: reflective layer
- 4: third dielectric layer
- 5: light absorbing layer
- 6: second dielectric layer
- 7: decomposition reaction layer
- 8: first dielectric layer
- 9: light transmission layer
- 10: optical recording disc
- 20: laser beam

### [DESCRIPTION OF THE PREFERRED EMBODIMENTS]

Hereinafter, preferred embodiments of the present invention will be described in detail with reference to accompanying drawings.

Figure 1 is a schematic cross sectional view showing an optical recording disc that is a preferred embodiment of the present invention and Figure 2 is an enlarged schematic cross-sectional view of the part of the optical recording disc in Figure 1 indicated by A.

As shown in Figures 1 and 2, an optical recording disc 1 according to this embodiment includes a substrate 2, and a reflective layer 3, a third dielectric layer 4, a light absorption layer 5, a second dielectric layer 6, a decomposition reaction layer 7, a first dielectric layer 8 and a light transmission layer 9 are laminated on the support substrate 2 in this order.

As shown in Figure 1, in this embodiment, the optical recording disc 1 is constituted so that data are recorded and data recorded therein are reproduced by irradiating a laser beam 20 thereonto from the side of the light transmission layer 9. The laser beam 20 has a wavelength of 390 nm to 420 nm and is converged onto the optical recording disc 1 using an objective lens having a numerical aperture of 0.7 to 0.9.

The substrate 2 serves as a support of the optical recording disc 1 for ensuring mechanical strength required for the optical recording disc 1.

The material used to form the substrate 2 is not particularly limited insofar as the substrate 2 can serve as the support of the optical recording disc 1. The substrate 2 can be formed of glass, ceramic, resin or the like. Among these, resin is preferably used for forming the substrate 2 since resin can be easily shaped. Illustrative examples of resins suitable for forming the substrate 2 include polycarbonate resin, acrylic resin, epoxy resin, polystyrene resin, polyethylene resin, polypropylene resin, silicone resin, fluoropolymers, acrylonitrile butadiene styrene resin, urethane resin and the like. Among these, polycarbonate resin is most preferably used for forming the substrate 2 from the viewpoint of easy processing, optical characteristics and the like.

In this embodiment, the substrate 2 is formed of polycarbonate resin and has a thickness of 1.1 mm.

As shown in Figure 2, the reflective layer 3 is formed on the surface of the substrate 2 of the optical recording disc 1.

The reflective layer 3 serves to dissipate heat generated by the laser beam 20 from the region irradiated with the laser beam 20 to the regions therearound and simultaneously serves to reflect the laser beam 20 entering through the light transmission layer 9 so as to emit it from the light transmission layer 9.

The material usable for forming the reflective layer 3 is not particularly limited insofar as it can reflect the laser beam 20 and dissipate heat generated by the laser beam 20 therethrough and the reflective layer 3 preferably contains at least one kind of element selected from the group consisting of Mg, Al, Ti, Cr, Fe, Co, Ni, Cu, Zn, Ge, Ag, Pt and Au.

The reflective layer 3 can be formed on the surface of the substrate 2 by a gas phase growth process using chemical species containing elements for forming the reflective layer 3. Illustrative examples of the gas phase growth processes include vacuum deposition process, sputtering process and the like.

The reflective layer 3 is formed so as to have a thickness of 10 nm to 300 nm and it is preferable for the reflective layer 3 to have a thickness of 20 nm to 200 nm. However, the thickness of the reflective layer 3 is not particularly limited insofar as it is within the above identified thickness range.

In the case where the reflective layer 3 is thinner than 10 nm, the reflective layer cannot dissipate heat therethrough in a desired manner. On the other hand, in the case where the reflective layer 3 is thicker than 300 nm, it takes a very long time to form the reflective layer and the productivity of the reflective layer 3 is liable to become poor.

As shown in Figure 2, the third dielectric layer 4 is formed on the surface of the reflective layer 3 of the optical recording disc 1.

In this embodiment, the third dielectric layer 4 serves to protect the substrate 2 and the reflective layer 3 and also physically and chemically protect the light absorption layer 5 formed thereon.

The dielectric material usable for forming the third dielectric layer 4 is not particularly limited and the third dielectric layer 3 is formed of a dielectric material containing oxide, sulfide, nitride or the combination thereof as a primary component. It is preferable to form the third dielectric layer 4 of oxide, nitride, sulfide or fluoride containing at least one element selected from a group consisting of Si, Zn, Al, Ta, Ti, Co, Zr, Pb, Ag, Sn, Ca, Ce, V, Cu, Fe and Mg, or a combination thereof.

The third dielectric layer 4 can be formed on the surface of the substrate 2 by a gas phase growth process using chemical species containing elements for forming the third dielectric layer 4. Illustrative examples of the gas phase growth processes include vacuum deposition process, sputtering process and the like.

The thickness of the third dielectric layer 4 is not particularly limited but it is preferable to form the third dielectric layer 4 so as to have a thickness of 10 nm to 140 nm.

As shown in Figure 2, the light absorption layer 5 is formed on the surface of the third dielectric layer 4 of the optical recording disc 1.

In this embodiment, the light absorption layer 5 serves to absorb a laser beam 20 whose power is set to the recording power and which is irradiated onto the optical recording disc 1, generate heat and transfer the thus generated heat to the decomposition reaction layer 7 described later.

In this embodiment, the light absorption layer 5 is formed of an alloy containing one of Sb and Te having a high light absorption coefficient and low thermal conductivity.

As an alloy contained in the light absorption layer 5 and containing one of Sb and Te, an alloy represented by the general formula: (SbₐTe₁₋ₐ)_{1-b}M_{b} or {(GeTe)_{c}(Sb₂Te₃)_{1-c}}_{d}M_{1-d} is particularly preferable. Here, the element M represents an element other than Sb and Te.

In the case where the alloy which contains at least one of Sb and Te and is contained in the light absorption layer 5 is represented by the general formula: (SbₐTe₁₋ₐ)_{1-b}M, it is preferable for *a* and *b* to be such that *a* is equal to or larger than 0 and equal to or smaller than 1 and that *b* is equal to or larger than 0 and equal to or smaller than 0.25. In the case where ***b*** is larger than 0.25, the light absorption coefficient of the light absorption layer 5 becomes lower than the required value and the thermal conductivity thereof becomes lower than the required value required.

On the other hand, in the case where the alloy contained in the light absorption layer 5 and containing at least one of Sb and Te is represented by the general formula: {(GeTe)_{c}(Sb₂Te₃)_{1-c}}_{d}M_{1-d}, it is preferable for c and d to be such that c is equal to or larger than 1/3 and equal to or smaller than 2/3 and *d* is equal to or larger than 0.9.

The element M is not particularly limited but it is preferable for the element M to be at least one element selected from the group consisting of In, Ag, Au, Bi, Se, Al, Ge, P, H, Si, C, V, W, Ta, Zn, Mn, Ti, Sn, Pb, Pd, N, O and rare earth elements (Sc, Y and lanthanoid) as a primary component. In the case where a laser beam having a wavelength λ of 380 nm to 450 nm is employed, it is particularly preferable for the element M to be at least one element selected from a group consisting of Ag, In, Ge and rare earth elements.

The light absorption layer 5 can be formed on the surface of the third dielectric layer 4 by a gas phase growth process using chemical species containing elements for forming the light absorption layer 5. Illustrative examples of the gas phase growth processes include vacuum deposition process, sputtering process and the like.

It is preferable for the light absorption layer 5 to have a thickness of 5 nm to 100 nm. In the case where the thickness of the light absorption layer 5 is smaller than 5 nm, the amount of light absorbed therein becomes too small and on the other hand, in the case where the thickness of the light absorption layer 5 is larger than 100 nm, the light absorption layer 5 does not readily deform when a bubble pit is formed in the decomposition reaction layer 7 as described later.

As shown in Figure 2, the second dielectric layer 6 is formed on the surface of the light absorption layer 5 of the optical recording disc 1.

In this embodiment, the second dielectric layer 6 serves to physically and chemically protect the decomposition reaction layer 7 in cooperation with the first dielectric layer 8 as described later.

The dielectric material usable for forming the second dielectric layer 6 is not particularly limited and the third dielectric layer 4 is formed of a dielectric material containing oxide, sulfide, nitride or the combination thereof as a primary component. It is preferable to form the third dielectric layer 5 of oxide, nitride, sulfide or fluoride containing at least one element selected from a group consisting of Si, Zn, Al, Ta, Ti, Co, Zr, Pb, Ag, Sn, Ca, Ce, V, Cu, Fe and Mg, or a combination thereof.

The second dielectric layer 6 can be formed on the surface of the light absorbing layer 5 by a gas phase growth process using chemical species containing elements for forming the second dielectric layer 6. Illustrative examples of the gas phase growth processes include vacuum deposition process, sputtering process and the like.

It is preferable to form the second dielectric layer 6 so as to have a thickness of 5 nm to 100 nm.

As shown in Figure 2, the decomposition reaction layer 7 is formed on the surface of the second dielectric layer 6 of the optical recording disc 1.

In this embodiment, the decomposition reaction layer 7 serves as a recording layer and a recording mark is formed in the decomposition reaction layer 7 when data are to be recorded in the optical recording disc 1.

In this embodiment, the decomposition reaction layer 7 contains platinum oxide PtOx as a primary component.

In this embodiment, it is particularly preferable for xto be equal to or larger than 1.0 and smaller than 3.0 in order to obtain a reproduced signal having a high C/N ratio even in the case where the length of a recording mark or the length of a blank region between neighboring recording marks is shorter than the resolution limit.

The decomposition reaction layer 7 can be formed on the surface of the second dielectric layer 6 by a gas phase growth process using chemical species containing elements for forming the decomposition reaction layer 7. Illustrative examples of the gas phase growth processes include vacuum deposition process, sputtering process and the like.

It is preferable to form the decomposition reaction layer 7 so as to have a thickness of 2 nm to 50 nm.

As shown in Figure 2, the first dielectric layer 8 is formed on the surface of the decomposition reaction layer 7 of the optical recording disc 1.

In this embodiment, the first dielectric layer 8 serves to physically and chemically protect the decomposition reaction layer 5.

The material for forming the first dielectric layer 8 is not particularly limited and it is preferable to form the first dielectric layer 8 of oxide, nitride, sulfide or fluoride containing at least one element selected from a group consisting of Si, Zn, Al, Ta, Ti, Co, Zr, Pb, Ag, Sn, Ca, Ce, V, Cu, Fe and Mg, or a combination thereof.

The first dielectric layer 8 can be formed on the surface of the decomposition reaction layer 7 by a gas phase growth process using chemical species containing elements for forming the first dielectric layer 8. Illustrative examples of the gas phase growth processes include vacuum deposition process, sputtering process and the like.

As shown in Figure 2, the light transmission layer 9 is formed on the surface of the first dielectric layer 8 of the optical recording disc 1.

The light transmission layer 9 is a layer through which the laser beam 20 is transmitted and the surface thereof forms a light incidence plane of the laser beam 20.

It is preferable for the light transmission layer 9 to have a thickness of 10 µm to 200 µm and more preferable for the light transmission layer 8 to have a thickness of 50 µm to 150 µm.

The material for forming the light transmission layer 9 is not particularly limited insofar as it is optically transparent and has a low absorption ratio and a reflectivity with respect to a laser beam having a wavelength of 390 nm to 420 nm of the wavelength of the laser beam 20, and a low birefringence factor. In the case where the light transmission layer 9 is formed using a spin coating method or the like, an ultraviolet ray curable resin, an electron beam curable resin, a thermosetting resin or the like can be used for forming the light transmission layer 9 and an activated energy ray curable type resin such as an ultraviolet ray curable resin and an electron beam curable resin is most preferably used for forming the light transmission layer 9.

The light transmission layer 9 may be formed by adhering a sheet formed of light transmittable resin onto the surface of the first dielectric layer 8 using an adhesive agent.

In the case where the light transmission layer 9 is formed using a spin coating method, the thickness thereof is preferably 10 µm to 200 µm and in the case where the light transmission layer 9 is formed by adhering a sheet formed of light transmittable resin onto the surface of the first dielectric layer 8 using an adhesive agent, the thickness thereof is preferably 50 µm to 150 µm.

Data are recorded in and reproduced from the thus constituted optical recording disc 1 as set out in the following.

Figure 3 (a) is a partly enlarged schematic cross-sectional view of the optical recording disc 1 before data were recorded therein and Figure 3 (b) is a partly enlarged schematic cross-sectional view of the optical recording disc 1 after data were recorded therein.

When data are to be recorded in the optical recording disc 1, the optical recording disc 1 is irradiated with a laser beam 20 from the side of the light transmission layer 9.

In this embodiment, in order to record data in the optical recording disc 1 with a high density, the laser beam 20 having a wavelength λ of 390 nm to 420 nm is converged onto the optical recording disc 1 using an objective lens having a numerical aperture NA of 0.7 to 0.85.

The power of the laser beam 20 is determined so as to be higher than 4 mW and equal to or lower than 12 mW. Here, the power of the laser beam 20 is defined as the power of the laser beam 20 on the surface of the optical recording disc 1.

When the optical recording disc 1 is irradiated with the laser beam L whose power is set to the recording power, since the light absorption layer 5 is formed of an alloy containing one of Sb and Te having a high light absorption coefficient, the region of the light absorption layer 5 irradiated with the laser beam L is heated.

Heat generated in the light absorption layer 5 is transferred to the decomposition reaction layer 7 and the temperature of the decomposition reaction layer 7 increases.

Since the platinum oxide contained in the decomposition reaction layer 7 as a primary component has high transmittance with respect to the laser beam 20, the decomposition reaction layer 7 itself does not readily generate heat even if irradiated with the laser beam 20. Therefore, it is difficult to heat the decomposition reaction layer 7, which has a thickness of 5 nm to 100 nm, to a temperature equal to or higher than the decomposition temperature of platinum oxide. However, in this embodiment, since the optical recording medium 1 includes the light absorbing layer 5 formed of the alloy containing at least one of Sb and Te each having high light absorbance, the light absorbing layer 5 generates heat and heat generated in the light absorbing layer 5 is transferred to the decomposition reaction layer 7, whereby the temperature of the decomposition reaction layer 7 increases.

Thus, when the decomposition reaction layer 7 is heated to a temperature equal to or higher than the decomposition temperature of platinum oxide, the platinum oxide contained in the decomposition reaction layer 7 as a primary component is decomposed into platinum and oxygen.

As a result, as shown in Figure 3 (b), a bubble pit 7a is formed in the decomposition reaction layer 7 by oxygen gas generated by the decomposition of the platinum oxide and fine particles 7b of platinum precipitate into the bubble pit 7a.

Simultaneously, as shown in Figure 3 (b), the second dielectric layer 6 is deformed together with the decomposition reaction layer 7 by the pressure of the oxygen gas.

Since the region where the bubble pit 7a is formed and the second dielectric layer 6 and the decomposition reaction layer 7 are deformed in this manner has different optical properties from those of other regions, a recording mark is constituted by the region where the bubble pit 7a is formed and the second dielectric layer 6 and the decomposition reaction layer 7 are deformed.

In this embodiment, thus formed recording marks and blank regions between neighboring recording marks include ones having a length shorter than λ / 4NA and a recording mark train including recording marks and blank regions having lengths shorter than the resolution limit is formed.

Further, in this embodiment, the decomposition reaction layer 7 contains platinum oxide having a high decomposition temperature as a primary component, so that when the optical recording disc 1 is irradiated with a laser beam 20 whose power is set to the recording power to form a recording mark, it is possible to prevent the decomposition reaction of platinum oxide from occurring in regions other than the region irradiated with the laser beam 20 even if heat is diffused from the region of the decomposition reaction layer 7 irradiated with the laser beam 20 to the regions of the decomposition reaction layer 7 therearound. Therefore, it is possible to form the bubble pit 7a at a desired region of the decomposition reaction layer 7 to form a recording mark therein.

Furthermore, in this embodiment, when the platinum oxide is decomposed and fine particles 7b of platinum precipitate into the bubble pit 6a, thereby forming a recording mark, since the particle size of each of the fine particles 7b of platinum is smaller than the size of the bubble pit 7a formed in the decomposition reaction layer 7, it is possible to effectively prevent the shape of the bubble pit 6a from being affected by fine particles 7b of platinum precipitating into the bubble pit 7a and prevent a recording mark from being undesirably deformed.

Thus, a recording mark train is formed in the optical recording disc 1, thereby recording data therein. Data recorded in the optical recording disc 1 are reproduced in the following manner.

When data recorded in the optical recording disc 1 are to be reproduced, the laser beam 20 having a wavelength λ of 390 nm to 420 nm is first converged onto the optical recording disc 1 using an objective lens having a numerical aperture NA of 0.7 to 0.85.

In this embodiment, the power of the laser beam 20 used for reproducing data from the optical recording disc 1 is set higher than usual and normally set to 1 mW to 4 mW.

In a study done by the inventors of the present invention, it was found that in the case where the optical recording disc 1 is irradiated with the laser beam 20 having a wavelength λ of 390 nm to 420 nm using an objective lens having a numerical aperture NA of 0.7 to 0.85 from the side of the light transmission layer 8, data can be reproduced even when the length of a recording mark or the length of a blank region between neighboring recording marks constituting a recording mark train is shorter than the resolution limit.

Although it is not altogether clear why, in the case where the platinum oxide contained in the decomposition reaction layer 7 as a primary component is decomposed into platinum and oxygen, a bubble pit 7a is formed in the decomposition reaction layer 7 and fine particles 7b of platinum precipitate into the bubble pit 7a by the thus generated oxygen gas, thereby forming a recording mark in the decomposition reaction layer 7 and recording data in the optical recording disc 1, whereby it is possible to reproduce data recorded in the optical recording disc 1 even in the case where the length of a recording mark or the length of a blank region between neighboring recording marks constituting a recording mark train is shorter than the resolution limit, it is reasonable to conclude that near-field light is generated by irradiating the fine particles 7b of platinum precipitated into the bubble pit 7a with the laser beam 20 and the resolution limit disappears or that the resolution limit becomes smaller due to the interaction between the fine particles 7b of platinum precipitated into the bubble pit 7a and the laser beam 20 with which the fine particles 7b of platinum are irradiated.

In this embodiment, since the decomposition reaction layer 7 contains the platinum oxide whose decomposition temperature is high as a primary component, even when data are to be reproduced by irradiating the optical recording disc 1 with the laser beam 20 for reproducing data having a high power, there is no risk of platinum oxide decomposing into platinum and oxygen. Therefore, even in the case of repeatedly reproducing data recorded in the optical recording disc 1, a bubble pit 7a can be formed without change in the shape of a recording mark and a new bubble pit is not formed at regions other than the region where the recording mark is formed. Accordingly, it is possible to improve the reproduction durability of the optical recording disc 1.

Further, in this embodiment, since the reflective layer 3 having a thickness of 10 nm to 300 nm is formed on the substrate 2, the laser beam 20 is reflected by the surface of the reflective layer 3 when the optical recording disc 1 is irradiated with the laser beam 20 for reproducing data.

In a study done by the inventors of the present invention, it was found that in the case where the reflective layer 3 was not provided in the optical recording disc 1, data recorded in the optical recording disc 1 became degraded when the data recorded in the optical recording disc 1 were repeatedly reproduced.

Although it is not altogether clear why in the case where the reflective layer 3 is not provided in an optical recording disc 1, data recorded in the optical recording disc 1 becomes degraded when data are repeatedly reproduced,, it is reasonable to assume that in an optical recording disc 1 constituted so that data can be recorded therein and reproduced therefrom by converging a laser beam having a wavelength λ of 390 nm to 420 nm thereonto using an objective lens having a numerical aperture of 0.7 to 0.9, when it is irradiated with the laser beam for reproducing recorded data, the optical recording disc is heated and the shape of the bubble pit formed in the decomposition reaction layer and the state of the fine particles of noble metal precipitated into the bubble pit are changed or that not only the state of the decomposition reaction layer but also the states of layers other than the decomposition reaction layer are changed.

However, in this embodiment, the reflective layer having a thickness of 10 nm to 300 nm is formed on the substrate 2, so that when the optical recording disc 1 is irradiated with a laser beam 20 for reproducing data, heat generated by the laser beam 20 is diffused by the reflective layer 3 from the region of the decomposition reaction layer 7 irradiated with the laser beam 20 to the regions of the decomposition reaction layer 7 therearound and it is therefore possible to reliably prevent the optical recording disc 1 from being excessively heated. Accordingly, it is possible to prevent data recorded in the optical recording disc 1 from being degraded and improve the data reproduction durability of the optical recording disc 1.

Moreover, in the case where the reflective layer 3 having a thickness of 10 nm to 300 nm is formed on the substrate 2, light reflected by the reflective layer 3 and light reflected by layers formed on the reflective layer 3 interfere with each other, whereby the amount of reflected light that participates in the generation of a reproduced signal becomes large to improve the C/N ratio of the reproduced signal.

According to this embodiment, if a recording mark is formed in the decomposition reaction layer 7 by forming the bubble pit 7a in the decomposition reaction layer 7 and precipitating platinum fine particles 7b into the bubble pit 7a, data can be reproduced even when the lengths of a recording mark and a blank region between neighboring recording marks which constitute a recording mark train are shorter than the resolution limit. Therefore, since it is possible to record data in the optical recording disc 1 at a high density, it is possible to markedly increase the storage capacity of the optical recording disc 1.

Further, according to this embodiment, since the reflective layer 3 is formed on the substrate 2, when the optical recording disc 1 is irradiated with a laser beam 20 for reproducing data, heat generated by the laser beam 20 is diffused by the reflective layer 3 from the region of the decomposition reaction layer 7 irradiated with the laser beam 20 to the regions of the decomposition reaction layer therearound and it is therefore possible to reliably prevent the optical recording disc 1 from being excessively heated. Accordingly, it is possible to prevent data recorded in the optical recording disc 1 from being degraded and improve the data reproduction durability of the optical recording disc 1.

Furthermore, according to this embodiment, since the reflective layer 3 is formed on the substrate 2, light reflected by the reflective layer 3 and light reflected by layers formed on the reflective layer 3 interfere with each other, whereby the amount of reflected light that participates in the generation of a reproduced signal becomes large to improve the C/N ratio of the reproduced signal.

Figure 4 is a schematic perspective view showing an optical recording disc which is another preferred embodiment of the present invention and Figure 5 is an enlarged schematic cross-sectional view of the part of the optical recording disc in Figure 4 indicated by B within a cross section taken along the track of the optical recording disc.

As shown in Figure 5, an optical recording disc 10 according to this embodiment includes a substrate 2, a reflective layer 3, a second dielectric layer 6, a decomposition reaction layer 7, a first dielectric layer 8 and a light transmission layer 9 and has a different structure from that of the optical recording disc 1 shown in Figures 1 and 2 in that neither the light absorbing layer 5 nor the third dielectric layer 4 are formed between the reflective layer 3 and the second dielectric layer 6.

In this embodiment, the decomposition reaction layer 6 is formed so as to have a thickness of 20 nm to 80 nm.

Data are recorded in and reproduced from the thus constituted optical recording disc 10 as set out in the following.

When data are to be recorded in the optical recording disc 10, the optical recording disc 1 is irradiated with a laser beam 20 from the side of the light transmission layer 9.

In this embodiment, in order to record data in the optical recording disc 10 with a high density, the laser beam 20 having a wavelength λ of 390 nm to 420 nm is converged onto the optical recording disc 1 using an objective lens having a numerical aperture NA of 0.7 to 0.85.

The power of the laser beam 20 is set to be higher than 4 mW and equal to or lower than 12 mW.

Since the platinum oxide contained in the decomposition reaction layer 7 as a primary component has high transmittance with respect to the laser beam 20, even if the decomposition reaction layer 7 is irradiated with the laser beam 20, the decomposition reaction layer 7 itself does not readily generate heat. Therefore, it is difficult to heat the decomposition reaction layer 7 to the temperature equal to or higher than the decomposition temperature of platinum oxide. However, in this embodiment, since the decomposition layer 7 is formed to have a thickness of 20 nm to 80 nm so that the decomposition reaction layer 7 has high light absorbance, when the decomposition reaction layer 7 is irradiated with the laser beam 20, the decomposition reaction layer 6 itself absorbs the laser beam 20 and generates heat, whereby the temperature of the decomposition reaction layer 7 increases to the decomposition temperature of the platinum oxide or higher and the platinum oxide is decomposed into platinum and oxygen.

Therefore, in this embodiment, a bubble pit 7a is formed in the decomposition reaction layer 7 by oxygen gas generated by the decomposition of the platinum oxide and platinum fine particles precipitates into the bubble pit 7a, thereby forming a recording mark.

In this embodiment, thus formed recording marks and blank regions between neighboring recording marks include ones having a length shorter than λ / 4NA and a recording mark train including recording marks and blank regions having lengths shorter than the resolution limit is formed.

Further, in this embodiment, since the decomposition reaction layer 7 contains platinum oxide having a high decomposition temperature as a primary component, when the optical recording disc 1 is irradiated with a laser beam 20 whose power is set to the recording power to form a recording mark, even if heat is diffused from the region of the decomposition reaction layer 7 irradiated with the laser beam 20 to the regions of the decomposition reaction layer 6 therearound, it is possible to prevent the decomposition reaction of platinum oxide from occurring in regions other than the region irradiated with the laser beam 20. Therefore, it is possible to form the bubble pit 7a at a desired region of the decomposition reaction layer 7 to form a recording mark therein.

Furthermore, in this embodiment, when the platinum oxide is decomposed and fine particles 7b of platinum precipitate into the bubble pit 7a, thereby forming a recording mark, since the particle size of each of the fine particles 7b of platinum is smaller than the size of the bubble pit 6a formed in the decomposition reaction layer 7, it is possible to effectively prevent the shape of the bubble pit 7a from being affected by fine particles 7b of platinum precipitating into the bubble pit 7a and prevent a recording mark from being undesirably deformed.

Thus, data are recorded in the optical recording disc 10. Data recorded in the optical recording disc 10 are reproduced in the following manner.

When data recorded in the optical recording disc 10 are to be reproduced, the laser beam 20 having a wavelength λ of 390 nm to 420 nm is first converged onto the optical recording disc 10 using an objective lens having a numerical aperture NA of 0.7 to 0.85.

In this embodiment, the power of the laser beam 20 used for reproducing data from the optical recording disc 1 is set higher than usual and normally set to 1 mW to 4 mW.

Even when the length of a recording mark or the length of a blank region between neighboring recording marks constituting a recording mark train is shorter than the resolution limit, data can be reproduced by irradiating the optical recording disc 10 with the laser beam 20 having a wavelength λ of 390 nm to 420 nm using an objective lens having a numerical aperture NA of 0.7 to 0.85 from the side of the light transmission layer 9.

In this embodiment, since the decomposition reaction layer 7 contains the platinum oxide whose decomposition temperature is high as a primary component, even when data are to be reproduced by irradiating the optical recording disc 10 with the laser beam 20 for reproducing data having a high power, there is no risk of platinum oxide decomposing into platinum and oxygen. Therefore, even in the case of repeatedly reproducing data recorded in the optical recording disc 10, a bubble pit 7a can be formed without change in the shape of a recording mark and a new bubble pit is not formed at regions other than the region where the recording mark is formed. Accordingly, it is possible to improve the reproduction durability of the optical recording disc 10.

Further, according to this embodiment, since the reflective layer 3 having a thickness of 10 nm to 300 nm is formed on the substrate 2, when the optical recording disc 1 is irradiated with a laser beam 20 for reproducing data, heat generated by the laser beam 20 is diffused by the reflective layer 3 from the region of the decomposition reaction layer 7 irradiated with the laser beam 20 to the regions of the decomposition reaction layer 7 therearound and it is therefore possible to reliably prevent the optical recording disc 10 from being excessively heated. Accordingly, it is possible to prevent data recorded in the optical recording disc 10 from being degraded and improve the data reproduction durability of the optical recording disc 10.

Furthermore, according to this embodiment, since the reflective layer 3 is formed on the substrate 2, light reflected by the reflective layer 3 and light reflected by layers formed on the reflective layer 3 interfere with each other, whereby the amount of reflected light that participates in the generation of a reproduced signal becomes large to improve the C/N ratio of the reproduced signal.

According to this embodiment, if a recording mark is formed in the decomposition reaction layer 7 by forming the bubble pit in the decomposition reaction layer 7 and precipitating platinum fine particles into the bubble pit, data can be reproduced even when the lengths of a recording mark and a blank region between neighboring recording marks which constitute a recording mark train are shorter than the resolution limit. Therefore, since it is possible to record data in the optical recording disc 10 at a high density, it is possible to markedly increase the storage capacity of the optical recording disc 10.

Further, according to this embodiment, since the reflective layer 3 is formed on the substrate 2, when the optical recording disc 1 is irradiated with a laser beam 20 for reproducing data, heat generated by the laser beam 20 is diffused by the reflective layer 3 from the region of the decomposition reaction layer 7 irradiated with the laser beam 20 to the regions of the decomposition reaction layer 7 therearound and it is therefore possible to reliably prevent the optical recording disc 10 from being excessively heated. Accordingly, it is possible to prevent data recorded in the optical recording disc 10 from being degraded and improve the data reproduction durability of the optical recording disc 10.

Furthermore, according to this embodiment, since the reflective layer 3 is formed on the substrate 2, when the optical recording disc 1 is irradiated with a laser beam 20 for reproducing data, the laser beam 20 is reflected by the surface of the reflective layer 3 and the laser beam 20 reflected by the reflective layer 3 and the laser beam 20 reflected by layers formed on the reflective layer 3 interfere with each other, whereby the amount of reflected light that participates in the generation of a reproduced signal becomes large to improve the C/N ratio of the reproduced signal.

The present invention has thus been shown and described with reference to specific embodiments. However, it should be noted that the present invention is in no way limited to the details of the described arrangements but changes and modifications may be made.

## Claims

1. An optical recording disc constituted so that data can be recorded therein and reproduced therefrom by converging a laser beam having a wavelength λ of 390 nm to 420 nm thereonto using an objective lens having a numerical aperture of 0.7 to 0.9, the optical recording disc comprising at least a substrate, a reflective layer formed on the substrate and having a thickness of 10 nm to 300 nm, a second dielectric layer formed on the reflective layer and having a thickness of 5 nm to 100 nm, a decomposition reaction layer formed on the second dielectric layer, having a thickness of 2 nm to 80 nm and containing noble metal oxide as a primary component, a first dielectric layer formed on the decomposition reaction layer, and a light transmission layer formed on the first dielectric layer and having a thickness of 10 µm to 200 µm and being constituted so that when it is irradiated with the laser beam from the side of the light transmission layer, the noble metal oxide contained in the decomposition reaction layer as a primary component is decomposed into a noble metal and oxygen so that a bubble pit is formed in the decomposition reaction layer by thus generated oxygen gas and fine particles of the noble metal precipitate into the bubble pit, thereby forming a recording mark in the decomposition reaction layer.

2. An optical recording disc in accordance with Claim 1, wherein the noble metal oxide is platinum oxide and the platinum oxide is decomposed into platinum and oxygen when the decomposition reaction layer is irradiated with the laser beam via the light transmission layer.

3. An optical recording disc in accordance with Claim 2, wherein each of the fine particles of platinum has a particle diameter smaller than a bubble pit to be formed in the decomposition reaction layer, where the particle diameter of the fine particle of platinum is defined as the diameter of a spherical fine particle of platinum.

4. An optical recording disc in accordance with Claim 1, wherein the decomposition reaction layer has a thickness of 20 nm and 80 nm.

5. An optical recording disc in accordance with Claim 2, wherein the decomposition reaction layer has a thickness of 20 nm and 80 nm.

6. An optical recording disc in accordance with Claim 3, wherein the decomposition reaction layer has a thickness of 20 nm and 80 nm.

7. An optical recording disc in accordance with Claim 1, which further comprises a third dielectric layer having a thickness of 10 nm to 140 nm and a light absorbing layer formed on the third dielectric layer and having a thickness of 5 nm to 100 nm located between the reflective layer and the second dielectric layer and wherein the light absorbing layer absorbs the laser beam and generates heat when the decomposition reaction layer is irradiated with the laser beam from the side of the light transmission layer.

8. An optical recording disc in accordance with Claim 7, wherein the light absorbing layer contains at least one of Sb and Te.

9. An optical recording disc in accordance with Claim 7, wherein the light absorbing layer has a thickness of 2 nm to 50 nm.

10. An optical recording disc in accordance with Claim 8, wherein the light absorbing layer has a thickness of 2 nm to 50 nm.

11. An optical recording disc in accordance with Claim 7, wherein the second dielectric layer and the light absorbing layer are deformed when the bubble pit is formed in the decomposition reaction layer.

12. An optical recording disc in accordance with Claim 8, wherein the second dielectric layer and the light absorbing layer are deformed when the bubble pit is formed in the decomposition reaction layer.

13. An optical recording disc in accordance with Claim 9, wherein the second dielectric layer and the light absorbing layer are deformed when the bubble pit is formed in the decomposition reaction layer.

14. An optical recording disc in accordance with Claim 10, wherein the second dielectric layer and the light absorbing layer are deformed when the bubble pit is formed in the decomposition reaction layer.
